# EUROPEAN PATENT SPECIFICATION

(11) **EP 0 620 033 B1**
(45) Date of publication and mention of the grant of the patent: **19.03.1997**
(21) Application number: 93310229.5
(22) Date of filing: 17.12.1993
(51) Int. Cl.: B01D 45/10, B01D 47/06

(54) **Dust collector with means for spraying water**
Staubsammler mit Mitteln zum Sprühen von Wasser
Collecteur de poussières avec moyens pour pulvériser de l'eau

(30) Priority: 14.04.1993 JP 87463/93
(43) Date of publication of application: 19.10.1994
(73) Proprietor: KOMAKI KOGYO KABUSHIKI KAISHA, Komaki-shi, Aichi-ken (JP); OHBU KOKI YUGEN KAISHA, Kasugai-shi, Aichi-ken (JP)
(72) Inventor: Ito, Takeo, c/o Komaki Kogyo Kabushiki Kaisha, Komaki-shi, Aichi-ken (JP); Nishimura, Koichi, c/o Ohbu Koki Yugen Kaisha, Kasugai-shi, Aichi-ken (JP)
(74) Representative: Godwin, Edgar James

(56) References cited:
- EP-A- 0 337 940
- WO-A-88/03050
- WO-A-90/05015
- GB-A- 2 220 587
- US-A- 1 563 125

## Description

This invention relates to a dust collector collecting air containing dust, in working such as a quarry, and removing the dust from the air.

A large amount of dust is produced in workings where stones and rocks are broken into pieces or where gravel or sand is dealt with. A dust collector is provided in these workings for collecting air containing dust and removing the dust from the air. One of such conventional dust collectors comprises a bag filter disposed in a casing and a fan. Air containing dust is drawn into the casing through a duct by the blowing action of the fan. The air is then drawn through meshes of the bag filter such that only the dust is caught by the bag filter. Since the dust caught by the bag filter sometimes clogs or closes its meshes, the bag filter is oscillated periodically or successively so that the meshes are prevented from being clogged by the dust.

Other conventional dust collectors also employ filters such as the above-described bag filter. However, the filters necessitate means for removing the dust, which means complicates the construction of the dust collector. Furthermore, the filter needs to be periodically inspected and to be replaced by a new one so that the dust collector is maintained at a predetermined level of dust collecting performance. Thus, the inspection and replacement of the filter is troublesome and results in an increase of maintenance fees.

Yet another conventional means for cleaning air is described in EP-A-0 337 940, where air laden with impurites passes through a wall with passages in it, and over which wall a liquid film is passed. The resultant mixture of contaminated air and liquid impinges on baffle means positioned at each passage outlet from the wall, where the abrupt change of direction causes the impurities to be captured by the liquid and to drop with the liquid into a collection tank.

Therefore, an object of the present invention is to provide a dust collector wherein the dust can be removed from the air without the filter for the dust collection and the inspection can be performed readily.

The invention provides a dust collector comprising by a dust collecting chamber having an air inlet in one of two ends and an air outlet in the other end, a fan provided for drawing air containing dust through the air inlet into the dust collecting chamber and for exhausting the air in the dust collecting chamber through the air outlet outside the dust collecting chamber, a sprayer spraying water in the dust collecting chamber, a partition plate mounted in the dust collecting chamber so as to be opposed to the air outlet with a predetermined space therebetween, the partition plate having a closed portion where the same is opposed to the air outlet and a plurality of vent holes annularly disposed around the closed portion, the vent holes allowing the air containing dust and the sprayed water from the sprayer to pass therethrough, a collision wall annularly disposed around the outlet so as to be opposed to the vent holes, the collision wall catching the dust and the water when the air containing dust and the sprayed water having passed through the vent holes collide against the same such that the dust and the sprayed water are rendered muddy, and a plurality of discharge openings communicating with the dust collecting chamber for discharging the mud and the water in the collecting chamber outside the same.

Upon drive of the fan, the air containing the dust is drawn through the air inlet into the dust collecting chamber by the blowing action of the fan. The air is then caused to pass through the vent holes of the partition plate with the sprayed water from the sprayer. Since the pressure becomes lower at the air outlet side of the partition plate in the dust collecting chamber than at the air inlet side thereof, the air passes through the vent holes at a high speed. The air, having passed through the air holes at the high speed, collides against the collision wall such that the dust contained in the air adheres on the collision wall with the water. The dust adherent on the collision wall becomes soluble in water into mud. The mud is discharged outside through the discharge openings. The air from which the dust has been removed is discharged outside through the air outlet.

In the dust collector of the invention, the dust can be removed from the air without use of any filter that is required in the conventional dust collectors. Since the means for eliminating the dust clogging the meshes of the filter need not be provided, the construction of the dust collector can be simplified. Furthermore, since the filter is not employed in the dust collector of the invention, the periodical inspection and replacement of the filter is not necessitated. Consequently, the inspection can be performed readily, resulting in an economy in the maintenance of the dust collector.

In a preferred form, the dust collector may further comprise valves mounted at distal ends of the discharge openings respectively, the valves usually closing the respective discharge openings and opening the respective discharge openings when an amount of the mud and water discharged out of the dust collecting chamber reaches a predetermined value or above.

In another preferred form, the dust collector may further comprise a regulating plate mounted at the air inlet side in the dust collecting chamber so that the same is opposed to the vent holes with a predetermined space therebetween.

In further another preferred form, the dust collector may further comprise a water tank reserving water to be sprayed by the spray, a precipitation tub disposed in parallel with the water tank for reserving the water and mud discharged through the discharge openings, water guide means provided between the precipitation tub and the water tank for guiding the surface side water in the precipitation tub into the water tank, mud discharge means for discharging the mud precipitated in the precipitation tub outside the same.

The mud discharged out of the dust collecting chamber with the water is reserved in the precipitation tub. The mud precipitated at the bottom of the precipitation tub is discharged outside by the mud discharge means while the relatively clear surface side water is returned into the water tank so as to be reused to be supplied to the sprayer. Thus, the water can be used effectively and an amount of water used can be reduced. The dust collector can be effectively used particularly even where a sufficient amount of water cannot be secured.

The invention will be described, merely by way of example, with reference to the accompanying drawings, in which:
FIG. 1 is a longitudinally sectional view of the dust collector of the embodiment in accordance with the present invention;
FIG. 2 is a right-handed side view of the dust collector;
FIG. 3 is a partially broken left-handed side view of the dust collector;
FIG. 4 is a longitudinally sectional view of the dust collecting chamber; and
FIG. 5 is a view taken along line 5-5 in FIG. 1.

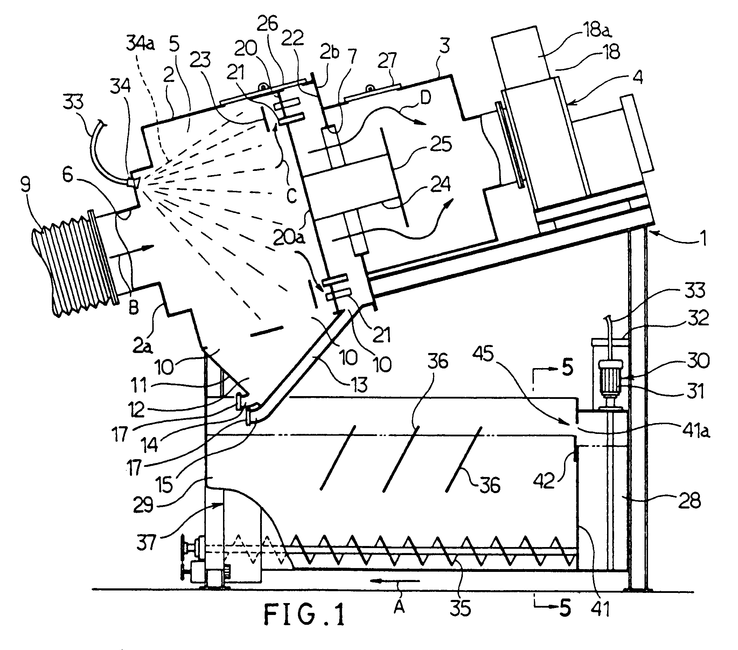

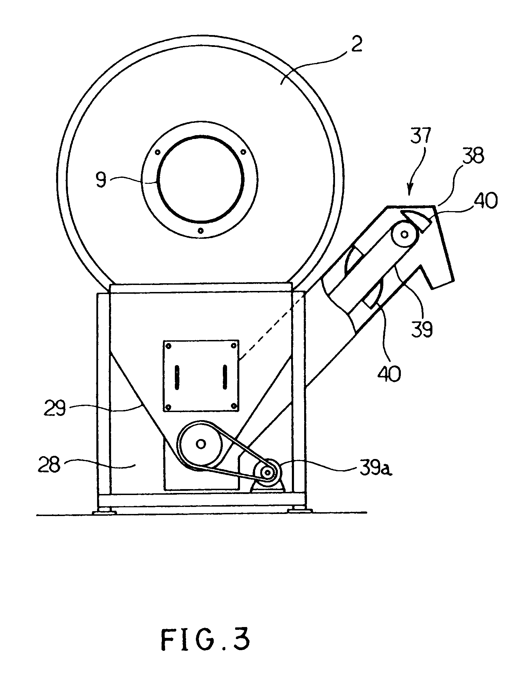

One embodiment of the invention will be described with the accompanying drawings. Referring to FIGS. 1 to 3, a casing 2, an intermediate casing 3 and a fan 4 are mounted to be lined on a base frame 1 so that the fan 4 is located relatively higher. The casing 2 is formed into a cylindrical shape and defines therein a dust collecting chamber 5. A central air inlet 6 is formed in a left-handed side wall 2a of the casing 2 while a central air outlet 7 is formed in a right-handed side wall 2b of the casing 2, as viewed in FIG. 1. Each of the air inlet 6 and outlet 7 is formed into a circular shape and has a diameter smaller than the dust collecting chamber 5. An air inlet duct 9 is detachably attached to the air inlet 6.

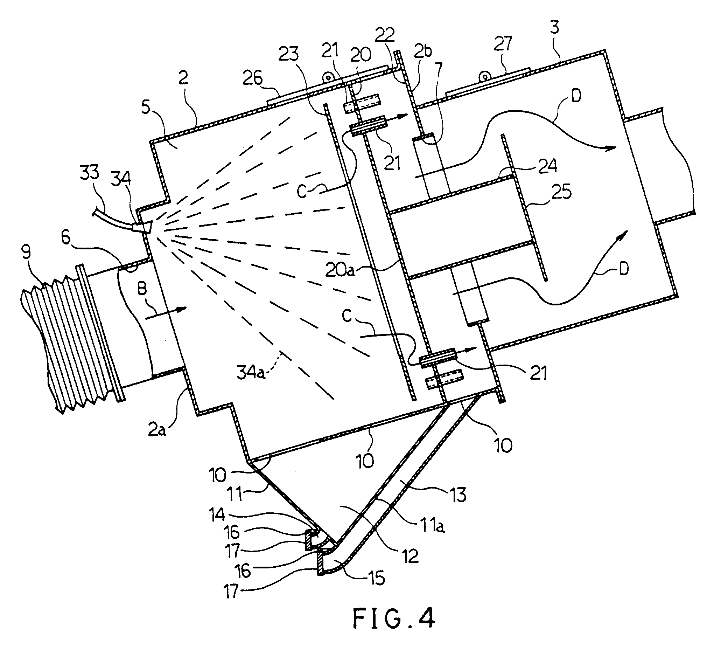

A plurality of discharge apertures 10 are formed in a lower wall of the casing 2. A duct casing 11 is mounted to communicate with the discharge apertures 10. The interior of the duct casing 11 is partitioned by a partition wall 11a (see FIG. 4) into a first duct 12 and a second duct 13. Discharge openings 14 and 15 are provided at lower ends of the ducts 12 and 13 respectively. Valves 17 are mounted via shafts 16 on distal ends of the discharge openings 14 and 15 respectively to be rotatably moved.

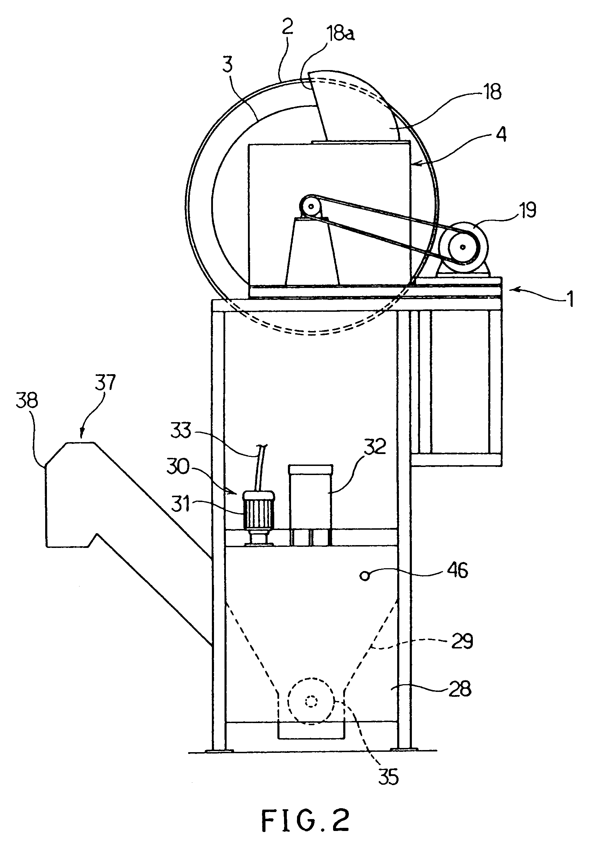

The intermediate casing 3 is formed into a cylindrical shape and communicate with the air outlet 7. The intermediate casing 3 further communicates at its right-handed end with a fan casing 18 of the fan 4, as viewed in FIG. 1. The fan 4 comprises the fan casing 18, an electric motor 19 (see FIG. 2) and a turbofan (not shown) provided in the fan casing 18 and driven by the motor 19. Air containing dust is drawn into the dust collecting chamber 5 through the duct 9 by the blowing action of the turbofan. After the air in the dust collecting chamber 5 is drawn into the fan casing 18 through the intermediate casing 3, the air is discharged outside through an air outlet 18a.

A partition plate 20 is mounted in the dust collecting chamber 5 to be opposed to the air outlet 7 with a predetermined space. The partition plate 20 is formed into a disc and has a closed portion 20a opposed to the air outlet 7. The partition plate further has a number of vent holes 21 annularly disposed around the closed portion 20a. Each vent hole 21 comprises a cylindrical member. A right-handed end of each vent hole 21 is opposed to the right-handed side wall 2a of the casing 2a with a predetermined space therebetween. The side wall 2a serves as a collision wall 22 as will be described later.

An annular regulating plate 23 is disposed at the left hand side of the partition plate 20 to be opposed to the vent holes 21 with a predetermined space between it and the air inlet 6, as viewed in FIG. 1. A baffle cylinder 24 projects from the right hand central side of the partition plate 20, terminating at the central interior of the intermediate casing 3, as viewed in FIG. 1. A disc 25 is mounted on the distal end of the baffle cylinder 24. Inspection windows 26 and 27 are provided in the upper portions of the casing 2 and the intermediate casing 3 respectively.

A water tank 28 is mounted on the lower portion of the base frame 1 to be positioned below the fan 4. A precipitation tub 29 is provided below the casing 2 and the intermediate casing 3 to be parallel with the water tank 28. The discharge openings 14 and 15 face the left hand interior of the precipitation tub 29, as viewed in FIG. 1.

A sprayer 30 comprises a pump 31 mounted on the water tank 28, a hose 33 connected to the pump 31 and a nozzle 34. Water reserved in the water tank 28 is pumped up by the pump 31 to be supplied through the hose 33 to the nozzle 34. The water is then sprayed by the nozzle 34 into the dust collecting chamber 5. A tank 32 is also mounted on the water tank 28 for containing a precipitant liquid supplied into the precipitation tub 29.

The precipitation tub 29 has a tapered bottom and provided with a screw 35 for transferring mud precipitated at the bottom thereof in the direction of arrow A in FIG. 1. A plurality of plates 36 are provided to be inclined in the central interior of the precipitation tub 29. A bucket conveyer 37 serving as mud discharging means is provided at the left hand side of the precipitation tub 29. The bucket conveyer 37 comprises a chain 39 in a conveyer case 38 and a plurality of buckets 40 mounted on the chain 39. An electric motor 39a is driven to drive the buckets 40 via the chain 39 so that the mud precipitated in the tub 29 is discharged outside.

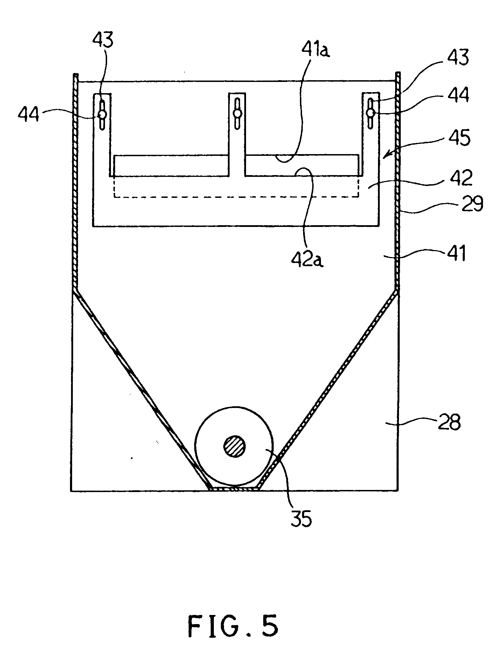

A partition plate 41 between the water tank 28 and the precipitation tub 29 has in its upper portion an opening 41a, as shown in FIG. 5. An overflow level adjusting plate 42 is mounted on the partition plate 41 by elongate slots 43 and screws 44 so that its position is vertically adjusted. The opening 41a and the overflow level adjusting plate 42 constitute water guide means 44 for guiding the surface side water in the precipitation tub 29 into the water tank 28. The water tank 28 has in its right hand side wall a water supply hole 46 through which the water is supplied thereto.

The operation of the dust collector will now be described. In use, a dust collector is so set that the distal end of the duct 9 faces a source of the dust. Then, the motor 19 of the fan 4 is energized to drive the turbofan. Furthermore, the pump 31 of the sprayer 30 is driven so that the water is sprayed from the nozzle 34 into the dust collecting chamber 5.

Air containing dust is drawn through duct 9 into the dust collecting chamber 5 by the blowing action of the turbofan, as shown by arrow B in FIGS. 1 and 4. The air is then caused to pass through the vent holes 21 of the partition plate 20 with the sprayed water 34a from the nozzle 34, as shown by arrow C in FIGS. 1 and 4. Since the central portion of the partition plate 20 is closed and only its outer peripheral vent holes 21 are open, the pressure is decreased by a suction force of the turbofan at the air outlet side of the partition plate 20 in the dust collecting chamber 5 while the pressure is increased at the air inlet side. Consequently, the air containing the dust and the sprayed water pass through the vent holes 21 at a high speed, colliding against the collision wall 22. The annular regulating plate 23 is disposed in front of the vent holes 21 and each vent hole 23 projects toward the regulating plate 23. Accordingly, since a flow of air toward each vent hole 21 necessarily curves, the contact of the dust with the sprayed water is enhanced and the collision of the dust against the inner wall of the dust collecting chamber 5, the regulation plate 23 and the partition plate 20 is also enhanced.

The dust contained in the air colliding against the collision wall 22 adheres on it together with the sprayed water such that the dust is removed from the air. The dust adherent on the collision wall 22 becomes soluble in the sprayed water into mud. The mud is discharged outside through the discharge apertures 10 into the second duct 13 with the water. Furthermore, at the air inlet side in the chamber 5, too, the dust is discharged through the discharge apertures 10 into the first duct 12 together with the water.

The air from which the dust has been removed is discharged outside through the air outlet 7, the intermediate casing 3 and the air outlet 18a of the fan casing 18. In this case, the disc 25 provided on the distal end of the baffling cylinder 24 prevents the liquid from flowing into the fan 4.

When the weight of the mud and water having flown into each of the first and second duct sections 13, 14 reaches a predetermined value or above, the weight causes each valve 17 to open such that the mud and water are discharged into the precipitation tub 29 to be reserved in it. Each valve 17 is reclosed upon completion of discharge of the mud and water.

The mud is precipitated at the bottom of the precipitation tub 29. The precipitated mud is transferred to the bucket conveyer side by the screw 35 in the direction of arrow A in FIG. 1. The mud and water are then scooped by the buckets 40 of the bucket conveyer 37 to be discharged outside.

With precipitation of the mud, the surface side water in the precipitation tub 29 becomes relatively clear. In this regard, mud particles are floating in the water in the precipitation tub 29 after the mud and water has been discharged into the precipitation tub 29. The mud particles cannot flow to the water tank side in the precipitation tub 29 without passing below the plates 36. Accordingly, the precipitation of the mud is enhanced and the right hand surface side water becomes clear, particularly, as viewed in FIG. 1.

The relatively clear, right hand surface side water in the precipitation tub 29 overflows an upper edge 42a of the overflow level adjusting plate 42, flowing into the water tank 28 to be reserved in it. The water is reused to be supplied to the sprayer 30.

According to the above-described embodiment, the water is sprayed into the air containing the dust. The air containing the dust is caused to pass through the vent holes of the partition plate 20 at the high speed together with the sprayed water. The air then collides against the collision wall 22 with the water such that the dust becomes soluble in the water into the mud. Thus, the dust is removed from the air without use of a filter. Accordingly, the means for removing the dust clogging the meshes of the filter is not necessary, which simplifies the construction of the dust collector. Furthermore, since the filter is not employed in the above-described dust collector, the periodical inspection and replacement of the filter is not necessitated. Consequently, the inspection can be performed readily and moreover, the above-described dust collector is advantageous in its maintenance since no parts to be replaced periodically are employed in it.

The valves 17 are provided at the distal ends of the discharge openings 14 and 15 respectively. Since the discharge openings 14, 15 are closed by the respective valves 17 except when the mud and the water are discharged through them. Consequently, an air flow due to a wind and wastes can be prevented from entering the dust collecting chamber through the discharge opening 14, 15.

The annular regulating plate 23 is disposed in front of the vent holes 21. Additionally, each vent hole 21 projects to the regulating plate side. Accordingly, when the air drawn into the dust collecting chamber 5 flows through the vent holes 21, the air flow necessarily curves such that the contact of the dust with the water is enhanced and the collision of the dust against the inner wall of the chamber 5, the partition plate 20 and the like is also enhanced. Consequently, the dust collecting efficiency can be improved.

The mud and the water discharged from the dust collecting chamber 5 are reserved in the precipitation tub 29. The precipitated mud is discharged outside by the bucket conveyer 37 while the relatively clear, surface side water in the precipitation tub 29 is returned into the water tank 28 so that the water is reused to be supplied to the sprayer 30. Thus, the water can be effectively used and an amount of water used can be reduced. In particular, the dust collector can be used even where a sufficient amount of water cannot be secured.

The foregoing disclosure and drawings are merely illustrative of the principles of the present invention and are not to be interpreted in a limiting sense. The only limitation is to be determined from the scope of the appended claims.

## Claims

1. A dust collector comprising:
a) a dust collecting chamber (5) having an air inlet (6) in one of two ends and an air outlet (7) in the other end;
b) a fan (4) provided for drawing air containing dust through the air inlet (6) into the dust collecting chamber (5) and for exhausting the air in the dust collecting chamber (5) through the air outlet (7) outside the dust collecting chamber (5);
c) a sprayer (30) spraying water in the dust collecting chamber (5);
d) a partition plate (20) mounted in the dust collecting chamber (5) so as to be opposed to the air outlet (7) with a predetermined space therebetween, the partition plate (20) having a closed portion (20a) where the same is opposed to the air outlet (7) and a plurality of vent holes (21) annularly disposed around the closed portion (20a), the vent holes (21) allowing the air containing dust and the sprayed water from the sprayer (30) to pass therethrough;
e) a collision wall (22) annularly disposed around the outlet (7) so as to be opposed to the vent holes (21), the collision wall (22) catching the dust and the water when the air containing dust and the sprayed water having passed through the vent holes (21) collide against the same such that the dust and the sprayed water are rendered muddy; and
f) a plurality of discharge openings (14, 15) communicating with the dust collecting chamber (5) for discharging the mud and the water in the collecting chamber (5) outside the same.

2. A dust collector according to claim 1, further comprising by valves (17) mounted at distal ends of the discharge openings (14, 15) respectively, the valves (17) usually closing the respective discharge openings (14, 15) and opening the respective discharge openings (14, 15) when an amount of the mud and water discharged out of the dust collecting chamber (5) reaches a predetermined value or above.

3. A dust collector according to claim 1, further comprising by a regulating plate (23) mounted at the air inlet side in the dust collecting chamber (5) so that the same is opposed to the vent holes (21) with a predetermined space therebetween.

4. A dust collector according to claim 1, further comprising by a water tank (28) reserving water to be sprayed by the sprayer (30), a precipitation tub (29) disposed in parallel with the water tank (28) for reserving the water and mud discharged through the discharge openings (14, 15), water guide means (45) provided between the precipitation tub (29) and the water tank (28) for guiding the surface side water in the precipitation tub (29) into the water tank (28), mud discharge means (37) for discharging the mud precipitated in the precipitation tub (29) outside the same.

## Patentansprüche

1. Staubabscheider, der folgende Komponenten aufweist:
a) eine Staubkammer (5), die einen Lufteinlaß (6) in einer von zwei Stirnseiten und einen Luftauslaß (7) in der anderen Stirnseite hat;
b) einen Lüfter (4), der zum Ansaugen von Luft, die Staub enthält, durch den Lufteinlaß (6) in die Staubkammer (5) und zum Abgeben der Luft in der Staubkammer (5) durch den Luftauslaß (7) nach außerhalb der Staubkammer (5) vorgesehen ist;
c) eine Sprühvorrichtung (30), die Wasser in die Staubkammer (5) sprüht;
d) eine Trennplatte (20), die so in der Staubkammer (5) montiert ist, daß sie sich dem Luftauslaß (7) gegenüber befindet und zwischen diesen ein festgelegter Abstand liegt, wobei die Trennplatte (20) da, wo diese sich dem Luftauslaß (7) gegenüber befindet, einen geschlossenen Abschnitt (20a) und eine Vielzahl von Lüftungslöchern (21) hat, die ringförmig um den geschlossenen Abschnitt (20a) angeordnet sind, wobei es auf Grund der Lüftungslöcher (21) möglich ist, daß die Luft, die Staub und das von der Sprühvorrichtung (30) gesprühte Wasser enthält, diese passiert;
e) eine Kollisionswand (22), die ringförmig um den Auslaß (7) angeordnet ist, so daß sie den Lüftungslöchern (21) gegenüberliegt, wobei die Kollisionswand (22) den Staub und das Wasser auffängt, wenn die Luft, die Staub und das Sprühwasser enthält, nachdem sie die Lüftungslöcher (21) passiert hat, mit dieser kollidiert, derart, daß der Staub und das Sprühwasser zu einem Schlamm werden; und
f) eine Vielzahl von Ablaßöffnungen (14, 15), die mit der Staubkammer (5) in Verbindung stehen, um den Schlamm und das Wasser in der Staubkammer (5) nach außerhalb derselben abzuführen.

2. Staubabscheider nach Anspruch 1, der außerdem Schieber (17) aufweist, die jeweils an den distalen Enden der Abgabeöffnungen (14, 15) angebracht sind, wobei die Schieber (17) die entsprechenden Abgabeöffnungen (14, 15) in der Regel verschließen und die entsprechenden Abgabeöffnungen (14, 15) öffnen, wenn die Menge an Schlamm und Wasser, die aus der Staubkammer (5) abgegeben worden ist, einen festgelegten Wert erreicht oder übersteigt.

3. Staubabscheider nach Anspruch 1, der außerdem eine Regelplatte (23) aufweist, die auf der Lufteinlaß-Seite in der Staubkammer (5) angebracht ist, so daß diese den Lüftungslöchern (21) mit einem festgelegten Abstand zwischen diesen gegenüberliegt.

4. Staubabscheider nach Anspruch 1, der außerdem folgende Komponenten aufweist: einen Wassertank (28), der das durch die Sprühvorrichtung (30) zu sprühende Wasser aufnimmt, einen Absetzbehälter (29), der parallel mit dem Wassertank (28) angeordnet ist, um das Wasser und den Schlamm aufzunehmen, die durch die Abgabeöffnungen (14, 15) abgegeben werden, Wasserführungsmittel (45), die zwischen dem Absetzbehälter (29) und dem Wassertank (28) vorhanden sind, um das Wasser der Oberflächenseite im Absetzbehälter (29) in den Wassertank (28) zu leiten, Schlamm-Abgabemittel (37) zur Abgabe des im Absetzbehälter (29) ausgefällten Schlamms nach außen.

## Revendications

1. Collecteur de poussières, comprenant:
a) une chambre de ramassage de poussières (5) comportant une entrée d'air (6) dans l'une des deux extrémités et une sortie d'air (7) dans l'autre extrémité;
(b) un ventilateur (4) servant à aspirer l'air contenant des poussières à travers l'entrée d'air (6) dans la chambre de ramassage des poussières (5) et à évacuer l'air contenu dans la chambre de ramassage des poussières (5) à travers la sortie d'air (7) vers l'extérieur de la chambre de ramassage des poussières (5);
c) un pulvérisateur (30) pulvérisant l'eau dans la chambre de ramassage des poussières (5);
d) une plaque de séparation (20), montée dans la chambre de ramassage des poussières (5), de sorte à être opposée à la sortie d'air (7) et espacée d'une distance prédéterminée de celle-ci, la plaque de séparation (20) comportant une partie fermée (20a) au niveau de laquelle elle est opposée à la sortie d'air (7), et plusieurs orifices de ventilation (21) agencés de façon annulaire autour de la partie fermée (20a), les orifices de ventilation (21) permettant le passage de l'air contenant des poussières et de l'eau pulvérisé provenant du pulvérisateur (30);
e) une paroi de collision (22), agencée de façon annulaire autour de la sortie (7), de sorte à être opposée aux orifices de ventilation (21), la paroi de collision (22) captant les poussières et l'eau lorsque l'air contenant des poussières et l'eau pulvérisée ayant passé à travers les orifices de ventilation (21) se heurtent contre elle, les poussières et l'eau pulvérisée étant ainsi transformées en boue; et
f) plusieurs ouvertures d'évacuation (14, 15) , communiquant avec la chambre de ramassage des poussières (5), pour évacuer la boue et l'eau contenues dans la chambre de ramassage (5) vers l'extérieur de celle-ci.

2. Collecteur de poussières selon la revendication 1, comprenant en outre des soupapes (15) montées respectivement au niveau des extrémités distales des ouvertures d'évacuation (14, 15), les soupapes (17) fermant normalement les ouvertures d'évacuation respectives (14, 15) et ouvrant les ouvertures d'évacuation respectives (14, 15) lorsque la quantité de boue et d'eau évacuée de la chambre de ramassage des poussières (5) atteint une valeur prédéterminée ou une valeur supérieure à celle-ci.

3. Collecteur de poussières selon la revendication 1, comprenant en outre une plaque de réglage (23), montée au niveau du côté d'entrée d'air dans la chambre de ramassage des poussières (5), de sorte à être opposée aux orifices de ventilation (21) et espacée d'une distance prédéterminée de ceux-ci.

4. Collecteur de poussières selon la revendication 1, comprenant en outre un réservoir d'eau (24) tenant en réserve l'eau devant être pulvérisée par le pulvérisateur (30), un bac de précipitation (29), agencé parallèlement au réservoir d'eau (28), pour tenir en réserve l'eau et la boue évacuées à travers les orifices d'évacuation (14, 15), un moyen de guidage de l'eau (45), agencé entre le bac de précipitation (29) et le réservoir d'eau (28), pour guider l'eau du côté de la surface du bac de précipitation (29) dans le réservoir d'eau (28), un moyen d'évacuation de la boue (37), pour évacuer la boue précipitée dans le bac de précipitation (29) en dehors de celui-ci.
